# EUROPÄISCHE PATENTSCHRIFT

(11) **EP 1 274 758 B1**
(45) Veröffentlichungstag und Bekanntmachung des Hinweises auf die Patenterteilung: **21.12.2005**
(21) Anmeldenummer: 01905797.5
(22) Anmeldetag: 19.02.2001
(51) Int. Cl.: C08G 18/42, C08G 18/66, C08G 18/76, C08G 63/12

(54) **POLYESTERPOLYOLE SOWIE DIE VERWENDUNG DER POLYESTERPOLYOLE ZUR HERSTELLUNG VON PUR-GIESSELASTOMEREN MIT VERBESSERTER HYDROLYSEBESTÄNDIGKEIT**
POLYESTER POLYOLS AND THE USE OF POLYESTER POLYOLS FOR PRODUCING PUR CAST ELASTOMERS THAT HAVE AN IMPROVED RESISTANCE TO HYDROLYSIS
POLYOLS DE POLYESTER ET UTILISATION DE POLYOLS DE POLYESTER POUR PRODUIRE DES ELASTOMERES DE MOULAGE PUR A RESISTANCE RENFORCEE A L'HYDROLYSE

(30) Priorität: 02.03.2000 DE 10010047
(43) Veröffentlichungstag der Anmeldung: 15.01.2003
(73) Patentinhaber: Bayer MaterialScience AG, 51368 Leverkusen (DE)
(72) Erfinder: BARNES, James-Michael, 53547 Breitscheid (DE); SCHNEIDER, Michael, 51061 Köln (DE); HOFFMANN, Andreas, 50733 Köln (DE)
(86) Internationale Anmeldenummer: PCT/EP2001/001828
(87) Internationale Veröffentlichungsnummer: WO 2001/064768

(56) Entgegenhaltungen:
- EP-A- 0 017 060
- FR-A- 2 001 223
- US-A- 4 362 825

## Beschreibung

Gegenstand der vorliegenden Erfindung sind Polyesterpolyole, die zur Herstellung von PUR-Gießelastomeren mit u.a. verbesserter Hydrolysebeständigkeit verwendet werden können.

Es ist bekannt, PUR-Gießelastomere durch Umsetzung von Polyesterpolyolen mit Polyisocyanaten herzustellen. Dabei besitzen die Polyesterpolyole gegenüber den bekannten Polyetherpolyolen Vorteile, beispielsweise liefern sie PUR-Elastomere mit einem insgesamt guten mechanischen Eigenschaftsniveau in besonders wirtschaftlicher Weise. Als Polyesterpolyol wird in der Praxis häufig Polyethylenadipat eingesetzt. Leider hat das Polyethylenadipat wie auch andere Polyesterpolyole den Nachteil, dass die daraus hergestellten Elastomere hydrolyseanfällig sind, was für manche Anwendungszwecke prohibitiv ist. Um den Nachteil der Hydrolyseanfälligkeit der PUR-Elastomere auszugleichen, kann man den einzusetzenden Polyesterpolyolen entsprechende Hydrolyseschutzmittel zusetzen, was jedoch ein entsprechendes Herstellungsverfahren weniger wirtschaftlich macht.

Weiterhin ist es technisch möglich zur Verbesserung der Hydrolysebeständigkeit der einzusetzenden Polyesterpolyole, längerkettige Glykol- und/oder Säurekomponenten zum Aufbau der Polyesterpolyole, wie zum Beispiel Polybutylenadipat, einzusetzen. Leider geht jedoch dann damit eine erhöhte Kristallisationsgefahr bei der Herstellung der PUR-Elastomeren einher. Dadurch bedingt werden oft Elastomere erhalten, die bei Raumtemperatur eine unerwünschte hohe Härte aufweisen. Darüber hinaus ist der hohe Schmelzpunkt der solchermaßen aufgebauten Polyesterpolyole für deren Verarbeitung ungünstig.

In US-A 4 362 825 werden Polyesterpolyole mit einer Hydroxylzahl von 40-80 und Molekulargewichten im Bereich von 1500 - 5000 beschrieben. Sie werden als Aufbaukomponente für die Herstellung von PUR-Elastomeren verwendet. Bei der Herstellung der Polyesterpolyole wird eine Mischung aus 5-50 Gew.-% 1,4-Butandiol, 8-35 Gew.-% 1,6-Hexandiol, 20-60 Gew.-% 1,5-Pentandiol und 2-15 Gew.-% eines Triols sowie 0-65 Gew.-% Diethylenglykol verwendet.

Aufgabe der vorliegenden Erfindung war es nun Polyesterpolyole zur Verfügung zu stellen, aus denen PUR-Gießelastomere hergestellt werden können, die eine hohe Hydrolysebeständigkeit aufweisen, ohne dass dabei das mechanische Eigenschaftsniveau wie das Kälteverhalten und die Stosselastizität verschlechert werden, und die sich in einfacher Weise verarbeiten lassen (lange Gießzeit bei kurzer Verfestigungszeit des eingesetzten PUR-Systems).

Gegenstand der Erfindung sind daher Polyesterpolyole, mit einem mittleren Äquivalentgewicht (berechnet aus der experimentell bestimmten OH-Zahl) im Bereich von 200 bis 4 000 hergestellt durch Umsetzung von
a) α,ω-Dicarbonsäuren oder deren Derivaten mit
b) 1,4-Butandiol,
c) 1,6-Hexandiol,
d) 1,3-Propandiol oder 1,5-Pentandiol oder deren Gemisch sowie
e) Polyolen mit 3 bis 6 Hydroxylgruppen,
wobei die Komponente b) in Mengen von 60 bis 85 mol%, die Komponente c) in Mengen von 7 bis 25 mol-%, die Komponente d) in Mengen von 7 bis 25 mol-% und die Komponente e) in Mengen von 0,2 bis 2,5 mol-%, bezogen auf die Gesamtmenge an Polyolen b) bis e) eingesetzt werden.

Bevorzugt sind erfindungsgemäß Polyesterpolyole, die die Komponente b) in Mengen von 60 bis 70 mol%, die Komponente c) in Mengen von 12 bis 22 mol-%, die Komponente d) in Mengen von 12 bis 22 mol-% und die Komponente e) in Mengen von 0,75 bis 1,75 mol%, bezogen auf die Gesamtmenge an Polyolen b) bis e) enthalten.

Als α,ω-Dicarbonsäuren oder deren Derivate (Aufbaukomponente a)) kommen insbesondere solche Dicarbonsäuren in Betracht, die 2 bis 12 Kohlenstoffatome, vorzugsweise 4 bis 6 Kohlenstoffatome, aufweisen. Ganz besonders bevorzugt sind dabei die entsprechenden aliphatischen Dicarbonsäuren.

Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure, bevorzugt Adipinsäure.

Als Dicarbonsäurederivate sind beispielsweise Dicarbonsäureanhydride oder Dicarbonsäuremono- oder -diester, die sich aus Alkoholen mit 1 bis 4 Kohlenstoffatomen und den oben erwähnten Dicarbonsäuren aufbauen. Besonders bevorzugt sind Dicarbonsäureestcr, die sich aufbauen aus Adipinsäure und Methanol, Ethanol, 1,2-Ethandiol oder 1,4-Butandiol.

Wie erwähnt werden erfindungsgemäß als Komponente e) Polyole mit 3 bis 6 Hydroxylgruppen eingesetzt. Bevorzugt werden solche Polyole eingesetzt, die 3 Hydroxylgruppen besitzen. Insbesondere sind solche Polyole als Komponente e) bei der Herstellung der erfindungsgemäßen Polyesterpolyole einzusetzen, die 3 bis 16 Kohlenstoffatome im Molekül, ganz besonders bevorzugt 3 bis 6 Kohlenstoffatome besitzen. Beispielsweise kommen in Betracht: Trimethylolpropan, Glycerin, Sorbit und Pentaerythrit.

Die Polyole der Komponente e) können sowohl einzeln als auch im Gemisch untereinander eingesetzt werden, wobei das günstigste Mischungsverhältnis sich nach dem Einsatzzweck der Polyesterpolyole richtet und leicht durch entsprechende Vorversuche bestimmt werden kann.

Die erfindungsgemäßen Polyesterpolyole können sowohl ohne Katalysator als auch in Gegenwart von bekannten Veresterungskatalysatoren, zweckmäßigerweise in einer Atmosphäre aus Inertgasen, z.B. Stickstoff, Helium und/oder Argon, hergestellt werden. Die Temperaturen betragen dabei ca. 150 bis 300°C, vorzugsweise 180 bis 230°C. Es kann dabei sowohl bei Normaldruck als auch bei vermindertem Druck (< 100 mbar) gearbeitet werden.

Die Umsetzung der erwähnten Komponenten a) bis e) wird erfindungsgemäß soweit fortgeführt, dass die gewünschte Säurezahl von kleiner als 10, vorzugsweise kleiner als 1 für die Polyesterpolyole erreicht wird.

Als Veresterungskatalysatoren kommen beispielsweise Eisen-, Cadmium-, Kobalt-, Blei-, Zink-, Antimon-, Magnesium-, Titan- und/oder Zinkkatalysatoren in Form der Metalle, Metalloxiden oder Metallsalzen in Betracht.

Selbstverständlich ist es auch möglich, die Herstellung der erfindungsgemäßen Polyesterpolyole statt in der Schmelze auch in flüssiger Phase in Gegenwart von geeigneten Verdünungs- und/oder Schleppmitteln, wie Benzol, Toluol, Xylol und/oder Chlorbenzol, durchzuführen. Das bei der Veresterung entstehende Wasser wird dabei durch azeotrope Destillation abgeführt.

Die Herstellung von Polyesterpolyolen ist an sich bekannt und beispielsweise beschrieben in E. Müller, Houben-Weyl, Methoden der organischen Chemie, Thieme-Verlag Stuttgart, Band 14.

Wie erwähnt, können die erfindungsgemäßen Polyesterpolyole verwendet werden zur Herstellung von Polyurethan, besonders "CASE"-Anwendungen (Coatings Adhesives Sealants/Elastomers) und Fasern, insbesondere Polyurethan-GießElastomeren. Diese Elastomere können sowohl in zelliger als auch in massiver Form hergestellt werden.

Die Herstellung von zelligen bis massiven Polyurethanelastomeren erfolgt in bekannter Weise durch Umsetzung eines Reaktionsgemisches aus den erfindungsgemäßen Polyesterpolyolen mit den aus der Literatur bekannten Polyisocyanaten, gegegbenenfals in Gegenwart von den bekannten Kettenverlängerungsmitteln, Treibmitteln und anderen in der PU-Chemie bekannten Zusatzstoffen, in der Weise, dass die Ausgangsmaterialien unter Einhaltung einer Isocyanatkennzahl von 70 bis 130 zur Reaktion gebracht wurden.

Die zum Aufbau der Polyurethan-Gießelastomere benötigten Polyisocyanate, Kettenverlängerungsmittel, Aktivatoren, Treibmittel, Hilfs- und Zusatzstoffe sind bekannt und beispielsweise beschrieben in R. Vieweg, A. Höchtlen (Hrsg.): "Kunststoff-Handbuch". Band VIII, Carl-Hanser-Verlag, München, 1993, Kapitel 3.

Ebenso bekannt sind Herstellungsverfahren für zellige bis massige Polyurethanclastomere. Wir verweisen in diesem Zusammenhang auf R. Vieweg, A. Höchtlen (Hrsg.): "Kunststoff-Handbuch", Band VIII, Carl-Hanser-Verlag, München, 1993, Kapitel 8.

Die mit Hilfe der neuen, erfindungsgemäßen Polyesterpolyole hergestellten Elastomere finden Verwendung zur Herstellung von Fasern und von Formkörpern aller Art, vorzugsweise im Maschinenbau und im Verkehrsmittelsektor. Die zelligen Elastomere eignen sich insbesondere zur Herstellung von Dämpfungs- und Federungselementen, die kompakten Elastomere finden bevorzugt Einsatz in Reifen, Rollen, Beschichtungen und Walzen als auch bei Walzenbeschichtungen und zur Herstellung von Riemen aller Art.

### Beispiele

### A. Herstellung der Ester

### Vergleichsbeispiel 1

Als Vergleich wurde ein handelsübliches trockenes Polybutylenadipatdiol mit Hydroxylzahl 52 mg KOH/g verwendet.

### Beispiel 1 (Erfindungsgemäß)

### Herstellung von Polyesterpolyol A

In einem beheizbaren Reaktionskessel (ausgestattet mit einer Probenentnahmestation) mit Destillationskolonne (regelbares. Rücklaufyerhältnis) und mit tarierter Destillationsvorlage wurden 82,61 kg (566 mol) Adipinsäure mit 36,0 kg (400 mol) 1,4-Butandiol, 10,4 kg (100 mol) 1,5-Pentandiol, 11,8 kg (100 mol) 1,6-Hexandiol und 1,22 kg (9 mol) Trimethylolpropan versetzt und unter N₂-Atmosphäre bis zur einer Temperatur von 180°C und einer Säurezahl von ca. 40 wurde entstehendes Wasser abdestilliert (3 h). Nach dem Zusetzen von 22 g SnCl₂-Hydrat wurde die Polykondensation unter kontinuierlicher Verminderung des Drucks bis auf 10 bis 15 mbar fortgesetzt und die Temperatur wurde dabei auf 230°C erhöht (2 h). Der Alkoholverlust aufgrund von Nebenreaktionen (Bildung von THF etc.) oder aufgrund von Verlusten über die Kolonne wurde durch Nachsetzen der Alkohole zur Schmelze ausgeglichen. Sobald eine OH-Zahl von 44 und eine Säurezahl von ca. 0,4 erreicht war, wurde die Reaktion durch Abkühlen auf Raumtemperatur und Befüllen der Apparatur mit N₂ beendet.

### B. Gießelastomerherstellung

### Vergleichsbeispiel 1

### Polyolformulierung

Trockenes Polybutylenadipatdiol (98 Gew.-Tle) gemäß Vergleichsbeispiel A.1 wurde mit dem Hydrolyseschutzmittel Stabaxol® 1 (2 Gew.-Teile) versetzt und bei 80°C 16 Stunden gelagert und bei einem Vakuum von weniger als 100 mbar entgast.

Stabaxol 1 ist ein Hydrolyseschutzmittel (ein sterisch gehindertes Carbodiimid) der Fa. Rheinchemie.

Es wurde Desmodur® PC der Firma Bayer AG Leverkusen (50,5 Gew.-Teile) (modifiziertes 4,4'-MDI, NCO-Gehalt: 26,4 %) eingerührt. Anschließend wurde trockenes 1,4-Butandiol (9,38 Gew.-Teile) blasenfrei 30 sekundenlang eingerührt und in beheizte Formen (bei ca. 110°C) gegossen.

Die Reaktion wurde mit DABCO® DC2 (0,001 Gew.-Teile) (Hersteller: Fa. Air Products), gelöst in 1,4-Butandiol katalysiert.

Nach ca. 20 Minuten wurden die Gießlinge entformt. Eine weitere thermische Nachbehandlung fand nicht statt.

Die Gießlinge erreichten ihre Endhärte nach sieben Tagen und zeigten die in der Tabelle 1 dargestellten Eigenschaften.

Wenn bei der Entformung oder anfänglichen Lagerung kalte Luft um die Gießlinge zirkuliert, führt dies zu einer nicht gewünschten Verhärtung der Formkörper.

Um diese Verhärtungsneigung zu bestimmen wurde nach der Entformung eine 6 mm dicke Platte des Elastomers in einem Raum bei 6 bis 10°C gelagert, um typische Winter-Bedingungen in einem Lagerraum zu simulieren. Eine weitere 6 mm dicke Platte des Elastomeren wurde in einem auf ca. 25°C warmen weitestgehend zugfreien Raum gelagert. Nach 24 Stunden wurden beide Teile 30 Minuten bei 25°C gelagert, um die Temperaturen auszugleichen (Konditionierung). Während die bei 25°C gelagerte Platte eine Shore Härte von 84 aufweist, liegt die Shore A Härte von der kaltgelagerten Platte bei 89 (siehe Tabelle 1).

Wie die stark temperaturabhängigen Shore-A-Härtern der hergestellten Platten zeigen, ist eine gleichbleibende Qualität der Platten bei der Herstellung durch die dabei auftretenden Temperaturschwankungen nicht gewährleistet.

### Vergleichsbeispiel 2

Die Herstellung des Elastomers wurde, wie in Vergleichsbeispiel 1 beschrieben, mit trockenem Polybutylenadipatdiol (98 Gew.-Tle), monomerem 4,4'-MDI (Desmodur® 44 der Fa. Bayer AG Leverkusen; 40,6 Gew.-Tle) und mit 9,69 Gew.-Tle. 1,4-Butandiol wiederholt.

Um die Tendenz zur Verhärtung zu bestimmen, wurde wie bei Vergleichsbeispiel 1 beschrieben gearbeitet. Die Verhärtungstendenz ist stark ausgeprägt (siehe Tabelle 1).

### Beispiel 1 (erfindungsgemäß)

Trockenes Polyesterpolyol A (Herstellung siehe Beispiel A.1) OH-Zahl 44 (100 Gew.-Teile) wurde ohne Hydrolysenschutzmittel bei 80°C und einem Vakuum von weniger als 100 mbar entgast.

Es wurde das modifizierte Monomer-MDI, Desmodur® PC (Handelsprodukt der Firma Bayer AG, Leverkusen; 50,5 Gew.-Tlc), eingerührt. Anschließend wurde trockenes 1,4-Butandiol (9,81 Gew.-Teile) 30 sekundenlang blasenfrei eingerührt und in beheizte Formen (bei ca. 110°C) gegossen.

Die Reaktion wurde durch DABCO® DC2 (0,004 Gew.-Telle) (Hersteller: Fa. Air Products) katalysiert, gelöst in 1,4-Butandiol.

Nach ca. 20 Minuten wurden die Gießlinge entformt. Eine weitere thermische Nachbehandlung fand nicht statt.

Die Gießlinge erreichten ihre Endhärte nach sieben Tagen und zeigten die in Tabelle 1 dargestellten Eigenschaften.

Um die Verhärtungsneigung zu bestimmen, wurde eine Lagerung bei verschiedenen Temperaturen, wie in Vergleichsbeispiel 1 beschrieben, durchgeführt.

Nach 24 Stunden wurden beide Teile 30 Minuten bei 25°C gelagert, um die Temperaturen auszugleichen (Konditionierung). Beide Plattenteile wiesen eine Shore A Härte von jeweils 84 auf.

### Beispiel 2 (erfindungsgemäß)

Die Herstellung des Elastomers wurde, wie in Beispiel 1 beschrieben, mit dem Monomer MDI Desmodur® 44 (Handelsprodukt der Firma Bayer AG, Leverkusen) (39,8 Gcw.-Teilen) anstelle von Desmodur®PC und 9,91 Gew.-Tle. 1,4-Butandiol wiederholt. Die Gießlinge erreichten ihre Endhärte (Shore A 87) nach sieben Tagen und zeigen die in der Tabelle 1 dargestellten Eigenschaften. Eine Verhärtungstendenz der Gießlinge war nicht zu erkennen. Um die Verhärtungsneigung abzuschätzen, wurde eine Lagerung bei verschiedenen Temperaturen, wie in Vergleichsbeispiel 1 beschrieben, durchgeführt. Die bei verschiedenen Temperaturen gelagerten Plattenteile wiesen eine Shore A Härte von jeweils 88 auf (siehe Tabelle 1).

Wie die erfindungsgemäßen Beispiele zeigen, ist aufgrund der temperaturunabhängigen konstanten Shore-A-Härte eine gleichbleibende Qualität bei den hergestellten Platten gewährleistet.

### Vergleichsbeispiel 3

Trockenes Polybutylenadipat gemäß Vergleichsbeispiel A.1 (110 Gew.-Teile) wurde bei 124°C 30 Minuten und einem Vakuum von weniger als 100 mbar entgast.

Es wurde Desmodur® 15 der Firma Bayer AG, Leverkusen (21 Gew.-Teile) (Naphthylen-1,5-diisocyanat) eingerührt. Nach 2 Minuten wurde Vakuum allmählich angelegt. Nach 15 Minuten stieg die Temperatur nicht mehr und die exotherme Reaktion wurde abgebrochen.

Anschließend wurde trockenes 1,4-Butandiol (3,3 Gew.-Teile) blasenfrei 30 sekundenlang eingerührt und das Reaktionsgemisch in heiße Formen (ca. 110°C) gegossen.

Nach ca. 20 Minuten wurden die Gießlinge entformt und anschließend 24 Stunden bei 110°C nachgetempert.

Die Gießlinge erreichten ihre Endhärte nach ca. 14 Tagen und zeigten die in Tabelle 1 dargestellten Eigenschaften.

### Beispiel 3 (erfindungsgemäß)

Das trockene Polyesterpolyol gemäß Beispiel A.1 (125,8 Gew.-Teile) wurde bei 127°C 30 Minuten und einem Vakuum von weniger als 100 mbar entgast.

Es wurde Desmodur® 15 der Firma Bayer AG, Leverkusen (21 Gew.-Teile) (Naphthylen-1,5-diisocyanat) eingerührt. Nach 2 Minuten wurde Vakuum allmählich angelegt. Nach 15 Minuten stieg die Temperatur nicht mehr und die exotherme Reaktion wurde abgebrochen.

Anschließend wurde trockenes 1,4-Butandiol (3,3 Gew.-Teile) blasenfrei 30 Sekunden lang eingerührt und das Reaktionsgemisch in heiße Formen (ca. 110°C) gegossen.

Nach ca. 20 Minuten wurden die Gießlinge entformt und anschließend 24 Stunden bei 110°C nachgetempert.

Die Gießlinge erreichten ihre Endhärte nach ca. 14 Tagen und zeigten die in Tabelle 1 dargestellten Eigenschaften.

Aus Tabelle 1 ist ersichtlich, dass die Hydrolysenbeständigkeit der aus dem erfindungsgemäßen Polyesterpolyol A hergestellten Elastomere (siehe Beispiele 1-3) besser ist als die Hydrolysenstabilität der aus dem Polybutylenadipatdiol hergestellten Elastomere (siehe Vergleichsbeispiel 1-3).

Währenddessen die aus dem erfindungsgemäßen Polyesterpolyol A hergestellten Elastomere über den betrachteten Temperaturbereich einen vergleichbar temperaturunabhängigen Verlauf von tan Delta und Speichermodul aufweisen, zeigen die aus Polybutylenadipat hergestellten Elastomere eine drastische Temperaturabhängigkeit des tan Delta und des Speichermoduls im Bereich von 20 bis 50°C. Diese Ergebnisse aus dem Torsionsschwingungsversuch belegen, dass die aus Polybutylenadipat hergestellten Elastomere bei Raumtemperatur extrem hart, unelastisch und auch in dieser Hinsicht minderwertig sind.

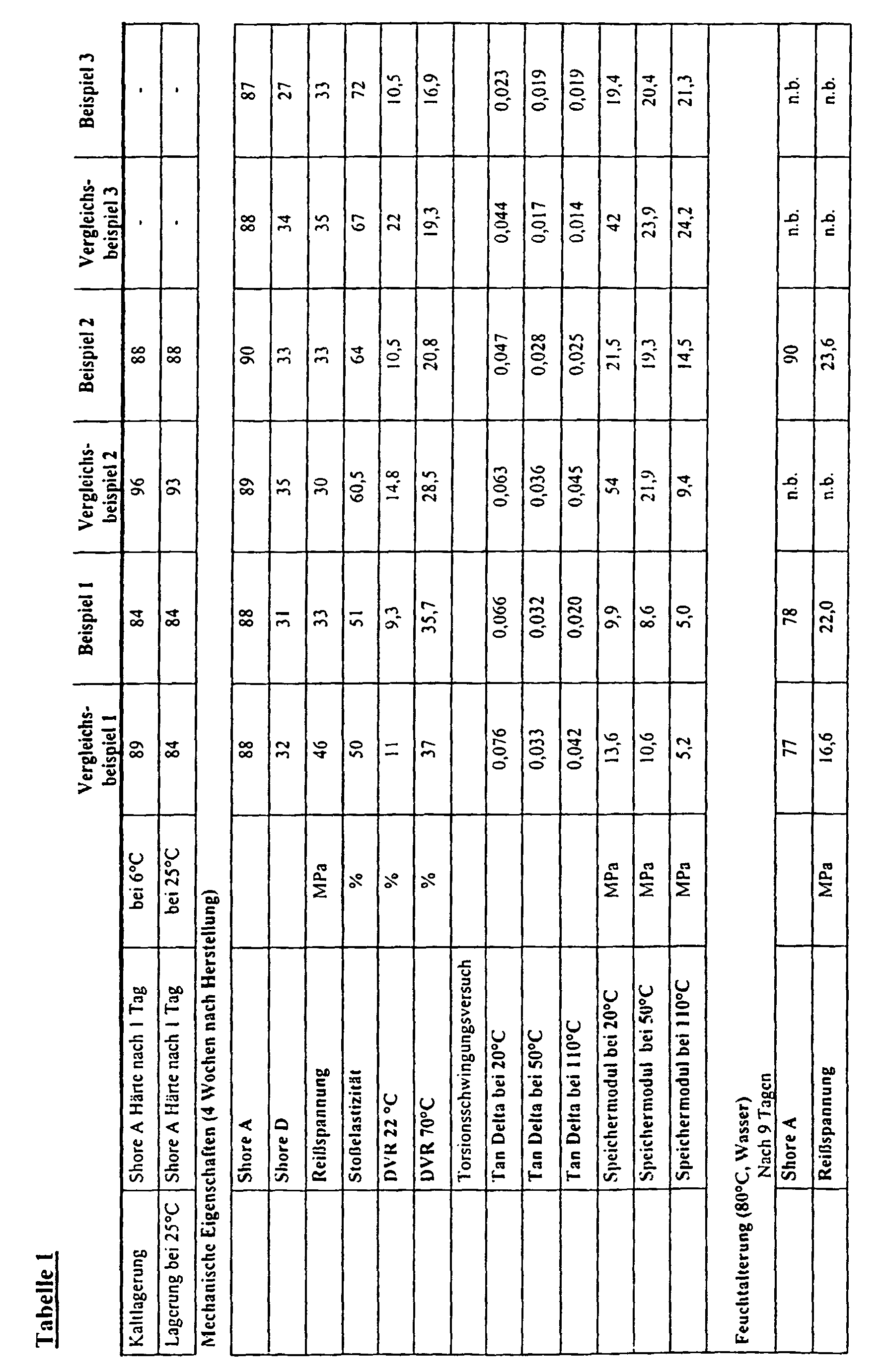

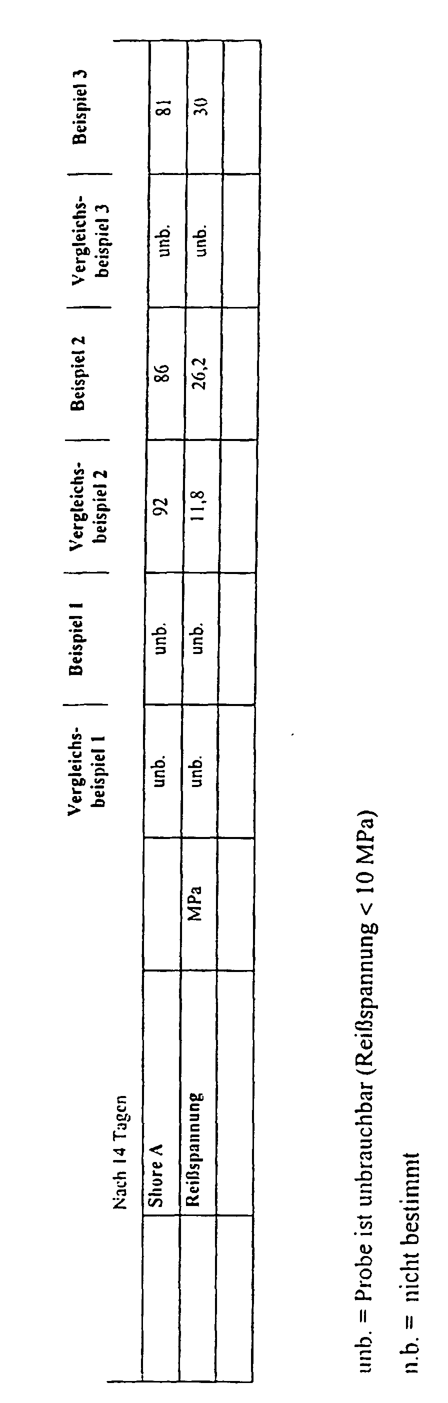

## Patentansprüche

1. Polyesterpolyole mit einem mittleren Äquivalentgewicht im Bereich von 200 bis 4 000, hergestellt durch Umsetzung von
a) α-ω-Dicarbonsäuren oder deren Derivaten
mit
b) 1,4-Butandiol,
c) 1,6-Hexandiol,
d) 1,3-Propandiol oder 1,5-Pentandiol oder deren Gemisch
sowie
e) Polyolen mit 3 bis 6 Hydroxylgruppen,
wobei die Komponente b) in Mengen von 60 bis 85 mol%, die Komponente c) in Mengen von 7 bis 25 Mol-%, die Komponente d) in Mengen von 7 bis 25 mol% und die Komponente e) in Mengen von 0,2 bis 2,5 Mol%, bezogen auf die Gesamtmenge an Polyolen b) bis e), eingesetzt werden.

2. Polyesterpolyole gemäß Anspruch 1, **dadurch gekennzeichnet, dass** die Komponente b) in Mengen von 60 bis 70 mol%, die Komponente c) in Mengen von 12 bis 22 mol-%, die Komponente d) in Mengen von 12 bis 22 mol-% und die Komponente e) in Mengen von 0,75 bis 1,75 mol%, bezogen auf die Gesamtmenge an Polyolen b) bis e), eingesetzt werden.

3. Verwendung der Polyesterpolyole nach Anspruch 1 als Aufbaukomponente für die Herstellung von Polyurethanelastomeren.

## Claims

1. Polyester polyols with an average equivalent weight in the range from 200 to 4,000, prepared by reacting
a) α,ω-dicarboxylic acids or derivatives thereof
with
b) butane 1,4-diol
c) hexane 1,6-diol
d) propane 1,3-diol or pentane 1,5-diol or a mixture thereof
and
e) polyols having 3 to 6 hydroxyl groups,
wherein component b) is used in amounts from 60 mole % to 85 mole %, component c) in amounts from 7 mole % to 25 mole %, component d) in amounts from 7 mole % to 25 mole % and component e) in amounts from 0.2 mole % to 2.5 mole %, based on the total amount of polyols b) to e).

2. Polyester polyols according to claim 1, **characterised in that** component b) is used in amounts from 60 mole % to 70 mole %, component c) in amounts from 12 mole % to 22 mole %, component d) in amounts from 12 mole % to 22 mole % and component e) in amounts from 0.75 mole % to 1.75 mole %, based on the total amount of polyols b) to e).

3. The use of the polyester polyols according to claim 1 as a structural component for the preparation of polyurethane elastomers.

## Revendications

1. Polyesters-polyols ayant un poids équivalent moyen dans l'intervalle de 200 à 4000, préparés par réaction de
a) des acides α,ω-dicarboxyliques ou leurs dérivés
avec
b) le 1,4-butanediol,
c) le 1,6-hexanediol,
d) le 1,3 propanediol ou le 1,5-pentanediol ou leur mélange,
et
e) des polyols contenant 3 à 6 groupes hydroxy,
le composant b) étant mis en oeuvre en quantité de 60 à 85 mol %, le composant c) en quantité de 7 à 25 mol %, le composant d) en quantité de 7 à 25 mol % et le composant e) en quantité de 0,2 à 2,5 mol %, sur la quantité totale des polyols b) à e).

2. Polyesters-polyols selon la revendication 1, **caractérisés en ce que** le composant b) est mis en oeuvre en quantité de 60 à 70 mol %, le composant c) en quantité de 12 à 22 mol %, le composant d) en quantité de 12 à 22 mol % et le composant e) en quantité de 0,75 à 1,75 mol %, sur la quantité totale des polyols b) à e).

3. Utilisation des polyesters-polyols selon la revendication 1 en tant que composants de synthèse pour la préparation d'élastomères de polyuréthannes.
